# DEMANDE DE BREVET EUROPEEN

(11) **EP 3 683 075 A1**
(43) Date de publication de la demande: **22.07.2020**
(21) Numéro de dépôt: 20151121.9
(22) Date de dépôt: 10.01.2020
(51) Int. Cl.: B60H 1/00

(54) **DISPOSITIF DE CHAUFFAGE, VENTILATION ET/OU CLIMATISATION**

(30) Priorité: 15.01.2019 FR 1900343
(71) Demandeur: Valeo Systemes Thermiques, 78320 Le Mesnil Saint Denis (FR)
(72) Inventeur: BRAULT, Julien, 78322 LE MESNIL SAINT-DENIS CEDEX (FR); RIGNAULT, Hervé, 78322 LE MENSIL SAINT DENIS CEDEX (FR); VITTAZ, Eric, 78322 LE MESNIL SAINT-DENIS CEDEX (FR)
(74) Mandataire: Tran, Chi-Hai

(57) **Abrégé**

L'invention concerne un dispositif (1) de chauffage, ventilation et/ou climatisation comprenant au moins un premier conduit (7) pour un premier flux d'air (F1), au moins un deuxième conduit (9) pour un deuxième flux d'air (F2), au moins une chambre de mixage (11) communiquant avec des sorties d'air (71, 91) respectives desdits conduits (7, 9), et au moins un volet de mixage (17) pour contrôler la répartition des flux d'air (F1, F2), mobile entre une première position et une deuxième position.

Ledit volet de mixage (17) présente au moins un évidement (171), délimitant, en position intermédiaire, un canal additionnel (18) pour l'écoulement d'un flux d'air additionnel (F1'). Ledit dispositif (1) comporte au moins une nervure (19) agencée entre le deuxième conduit (9) et le canal additionnel (18), de façon à favoriser l'écoulement du flux d'air additionnel (F1').

## Description

La présente invention se rapporte aux dispositifs de chauffage, ventilation et/ou climatisation pour véhicules automobiles.

Elle concerne plus particulièrement un dispositif comprenant un premier conduit, tel un conduit d'air froid, un deuxième conduit, tel un conduit d'air chaud, une chambre de mixage communiquant avec des sorties d'air respectives desdits conduits, et au moins un organe de mixage, propre à répartir un flux d'air entre ces conduits en proportion choisie de façon à ajuster la température de l'air dans la chambre de mixage.

On connaît déjà des dispositifs de ce type permettant de mélanger, dans une proportion réglée, un flux d'air froid provenant du conduit d'air froid et un flux d'air chaud provenant du conduit d'air chaud pour obtenir, dans la chambre de mixage, un flux d'air à température ajustée.

Ce flux d'air est ensuite réparti dans l'habitacle du véhicule par des moyens de distribution appropriés, comprenant des conduits de sortie d'air aboutissant à différentes bouches ou buses disposées en des endroits choisis de l'habitacle.

Selon une solution connue, les organes de mixage comprennent un volet de mixage, par exemple du type papillon, monté pivotant autour d'un axe et présentant deux ailes propres à contrôler respectivement les sorties des conduits d'air froid et d'air chaud.

Un tel volet peut se débattre de l'une à l'autre de deux positions extrêmes comprenant une position « chaud », dans laquelle la sortie du conduit d'air froid est fermée et la sortie du conduit d'air chaud est ouverte, et une position « froid » dans laquelle la sortie du conduit d'air chaud est fermée et la sortie du conduit d'air froid est ouverte.

Un tel dispositif, avec volet de mixage du type papillon, a notamment pour inconvénient que, lorsque le volet passe de la position « chaud » à la position « froid », de l'air froid pénètre dans la chambre de mixage à partir d'une région de la sortie du conduit d'air froid qui se trouve près d'un bord libre du volet papillon. Cette région particulière se trouve précisément à l'opposé de la région de la sortie du conduit d'air chaud, par laquelle le flux d'air chaud pénètre dans la chambre de mixage, c'est-à-dire près d'un bord opposé du volet papillon. Il en résulte que le flux d'air et le flux d'air chaud ont tendance à se stratifier, si bien que leur mélange ne peut se faire qu'à une distance éloignée du radiateur de chauffage, ce qui oblige à augmenter le volume de la chambre de mixage, et donc du dispositif.

L'invention a notamment pour but de surmonter un tel inconvénient.

À cet effet, l'invention a pour objet un dispositif de chauffage, ventilation et/ou climatisation de véhicule automobile, comprenant au moins un premier conduit pour l'écoulement d'un premier flux d'air, définissant une première sortie d'air, au moins un deuxième conduit pour l'écoulement d'un deuxième flux d'air, définissant une deuxième sortie d'air, au moins une chambre de mixage communiquant avec les sorties d'air respectives desdits conduits, et au moins un volet de mixage agencé de façon à contrôler la répartition des premier et deuxième flux d'air dans ladite au moins une chambre de mixage, ledit au moins un volet de mixage étant agencé mobile entre une première position obturant la première sortie d'air, et, une deuxième position obturant la deuxième sortie d'air.

Selon l'invention, ledit au moins un volet de mixage présente au moins un évidement, de façon à délimiter, lorsque ledit au moins un volet de mixage est agencé dans une position intermédiaire entre les première et deuxième positions, un canal additionnel pour l'écoulement d'un flux d'air additionnel à travers ledit au moins un volet de mixage.

Ledit dispositif comporte en outre au moins une nervure agencée entre le deuxième conduit et le canal additionnel, de façon à favoriser l'écoulement du flux d'air additionnel vers la chambre de mixage via le canal additionnel.

En particulier, le premier flux d'air est un flux d'air froid destiné à circuler dans le premier conduit. Le premier conduit est aussi dénommé conduit d'air froid. La première sortie d'air est aussi dénommée sortie d'air froid.

Le deuxième flux d'air est un flux d'air chaud destiné à circuler dans le deuxième conduit. Le deuxième conduit est aussi dénommé conduit d'air chaud. La deuxième sortie d'air est aussi dénommée sortie d'air chaud.

Le canal additionnel entre ledit au moins un volet de mixage et la deuxième sortie d'air, est un canal additionnel d'air froid, dans lequel est destiné à circuler un flux d'air froid additionnel.

La nervure permet de faire écran au moins en partie au deuxième flux d'air en direction de la chambre de mixage et favorise ainsi l'écoulement du flux d'air additionnel, tel qu'un flux d'air froid, à travers l'évidement vers la chambre de mixage, pour un meilleur mélange des flux d'air dans la chambre de mixage.

Ledit dispositif peut en outre comporter une ou plusieurs caractéristiques suivantes, prises séparément ou en combinaison.

Ledit dispositif comporte généralement un boîtier dans lequel sont agencés les éléments dudit dispositif. Le canal additionnel est délimité par la partie du volet de mixage présentant ledit au moins un évidement et une paroi du boîtier.

Ledit au moins un évidement peut être latéral. En variante, ledit au moins un évidement peut être sensiblement central.

Selon un aspect de l'invention, ledit au moins un volet de mixage comporte une paroi d'obturation agencée de façon à obturer au moins en partie la première sortie d'air lorsque ledit au moins un volet de mixage est dans la première position obturant, et à obturer au moins en partie la deuxième sortie d'air lorsque ledit au moins un volet de mixage est dans la deuxième position. La paroi d'obturation présente ledit au moins un évidement délimitant le canal additionnel, lorsque ledit au moins un volet de mixage est agencé dans une position intermédiaire.

Selon un autre aspect de l'invention, ledit dispositif comporte au moins deux nervures disposées contre deux parois opposées d'un boîtier dudit dispositif.

Selon un mode de réalisation préféré, ledit au moins un volet de mixage est monté pivotant autour d'un axe de rotation. Il s'agit par exemple d'un volet tambour.

Ledit au moins un volet de mixage peut comporter deux parois latérales reliées par une paroi centrale ou paroi d'obturation.

Selon un exemple de réalisation, ladite au moins une nervure s'étend sur une distance inférieure ou égale au tiers de largeur dudit au moins un volet de mixage. La largeur s'entend de la distance entre les bordures d'extrémité des deux parois latérales dudit au moins un volet de mixage.

Selon un autre aspect de l'invention, le dispositif comporte un échangeur thermique, logé dans le deuxième conduit, et ledit au moins un volet de mixage est agencé en vis-à-vis d'une extrémité de l'échangeur thermique, de sorte que le canal additionnel est délimité entre ledit au moins un volet de mixage et l'échangeur thermique.

Le flux d'air froid additionnel est destiné à s'écouler dans le canal additionnel d'air froid en contournant l'échangeur thermique logé dans le deuxième conduit ou conduit d'air chaud.

Selon encore un autre aspect de l'invention, le dispositif comporte une paroi mobile, dite porte esclave, reliée de façon articulée audit au moins un volet de mixage par une charnière, et configurée pour obturer la première sortie d'air froid lorsque ledit au moins un volet de mixage est dans la première position, et pour obturer une entrée du deuxième conduit, lorsque ledit au moins un volet de mixage est dans la deuxième position.

La paroi mobile aussi appelée porte esclave peut être reliée de façon articulée à une paroi latérale dudit au moins un volet de mixage. La porte esclave est mobile en pivotement par rapport à cette paroi latérale.

La charnière s'étend par exemple suivant un axe parallèle à l'axe de rotation dudit au moins un volet de mixage.

Selon un mode de réalisation, la paroi mobile s'étend en amont de l'échangeur thermique selon le sens d'écoulement du flux d'air, lorsque ledit au moins un volet de mixage est dans la deuxième position.

La paroi mobile comporte avantageusement au moins une ouverture. Une telle ouverture peut être prévue suivant un emplacement similaire audit au moins un évidement du volet de mixage, par exemple du même côté que ledit au moins un évidement ou de façon sensiblement centrale.

Le dispositif peut comporter au moins deux éléments de guidage complémentaires portés d'une part par la paroi mobile et d'autre part par une paroi d'un boîtier dudit dispositif. Lesdits éléments de guidage sont configurés pour coopérer de façon à guider la trajectoire de la paroi mobile lors du déplacement dudit au moins un volet de mixage.

Les éléments de guidage comportent par exemple au moins un pion de guidage et au moins un rail de guidage. La paroi mobile peut porter le ou les pions de guidage, par exemple deux pions opposés. Chaque pion est agencé à distance de la charnière. Une ou chaque paroi latérale du boîtier peut présenter un rail de guidage. Le rail de guidage est par exemple de forme générale rectiligne.

Selon encore un autre aspect de l'invention, le dispositif comporte au moins un conduit de sortie d'air en communication fluidique avec la chambre de mixage et configuré pour alimenter une buse débouchant dans une partie haute de l'habitacle, et au moins un autre canal additionnel comprenant une entrée débouchant au moins en partie dans la deuxième sortie d'air et une sortie débouchant au voisinage dudit au moins un conduit de sortie d'air.

Il s'agit en particulier d'un conduit de sortie d'air pour alimenter une bouche de dégivrage ou de ventilation dans l'habitacle.

Il s'agit d'un canal additionnel dans lequel est destiné à s'écouler le deuxième flux d'air ou flux d'air chaud.

Ledit au moins un canal additionnel d'air chaud permet de mélanger le flux d'air chaud provenant du conduit d'air chaud avec de l'air mixé provenant de la chambre de mixage.

D'autres avantages et caractéristiques de l'invention apparaîtront plus clairement à la lecture de la description suivante donnée à titre d'exemple illustratif et non limitatif, et des dessins annexés parmi lesquels :
La figure 1 représente une vue en perspective et en coupe d'un boîtier d'un dispositif de chauffage, ventilation et/ou climatisation selon l'invention.
La figure 2 est une vue agrandie d'une portion de la figure 1 montrant des conduits d'air délimités par le boîtier et un volet de mixage.
La figure 3 est une vue similaire à la figure 2 montrant le volet de mixage dans une première position permettant la circulation d'un premier flux d'air dans un premier conduit d'air.
La figure 4 est une vue agrandie d'une portion de la figure 1 montrant le volet de mixage dans une position intermédiaire permettant la circulation de plusieurs flux d'air dans deux conduits d'air et dans un canal d'air additionnel.
La figure 5 est une vue similaire à la figure 4 sur laquelle l'écoulement du premier flux d'air froid, d'un deuxième flux d'air chaud et d'un flux d'air froid additionnel est schématisé.
La figure 6 représente une vue en perspective du volet de mixage selon une première variante de réalisation.
La figure 7 est une vue en perspective agrandie d'une portion dudit dispositif montrant le volet de mixage selon une deuxième variante de réalisation.
La figure 8 est une autre vue agrandie d'une portion dudit dispositif montrant le volet de mixage selon la deuxième variante de réalisation.
La figure 9 est une vue en perspective agrandie d'une portion dudit dispositif montrant plus en détail une paroi mobile selon un mode de réalisation particulier.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

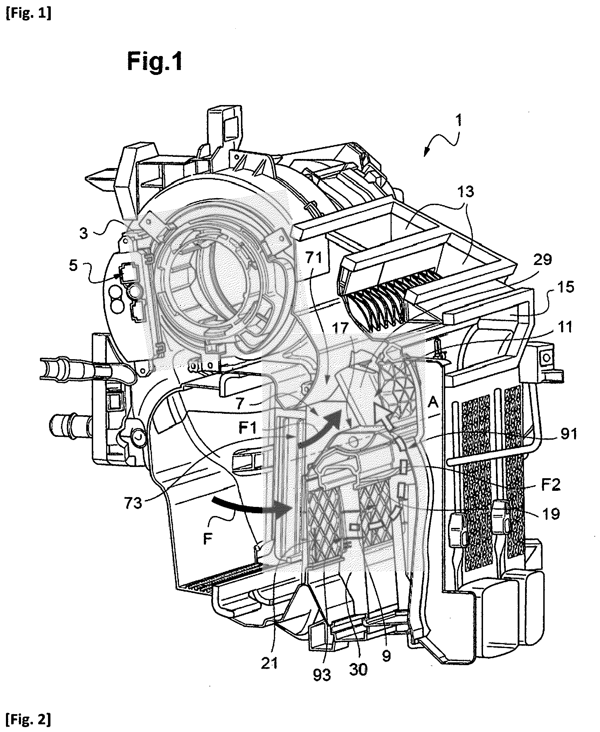

L'invention concerne un dispositif de chauffage, ventilation et/ou climatisation 1 notamment pour véhicule automobile représentée sur la figure 1. Il peut s'agir d'un dispositif 1 permettant d'avoir une distinction de température entre deux zones de l'habitacle, par exemple les parties gauche et droite de l'habitacle. Il s'agit alors d'un fonctionnement en mode bizones ou deux zones permettant un réglage séparé du flux d'air sortant respectivement au niveau des places à gauche et à droite de l'habitacle.

Le dispositif 1 comprend un boîtier 3. Dans le cas d'un dispositif 1 permettant un fonctionnement bi-zones, le boîtier 3 comporte une cloison de séparation interne 30 agencée de manière à séparer le boîtier 3 en deux moitiés, avantageusement égales. Une telle cloison de séparation interne 30 s'étend selon un plan médian. Lorsque le dispositif 1 est implantée dans le véhicule, la cloison de séparation interne 30 peut se situer par exemple sensiblement en position verticale et dans l'axe longitudinal du véhicule. Cette cloison de séparation interne 30 permet une distinction entre un flux d'air à destination d'une partie, par exemple gauche, de l'habitacle et un flux d'air à destination d'une autre partie, par exemple droite, de l'habitacle. Pour un tel dispositif 1 fonctionnant en bi-zones, la cloison de séparation interne 30 sépare également en deux les composants du dispositif 1 logés dans le boîtier 3, décrits par la suite. En variante ou en complément, des éléments ou composants décrits par la suite peuvent être agencés de part et d'autre de la cloison de séparation interne 30.

Le boîtier 3 est muni d'une entrée d'air 5 propre à admettre un flux d'air pulsé provenant de l'extérieur ou de l'habitacle du véhicule automobile. Le flux d'air pulsé peut traverser successivement un filtre et un échangeur thermique tel qu'un évaporateur (non représenté) parcouru par un fluide réfrigérant pour refroidir le flux d'air pulsé.

Le boîtier 3 délimite au moins un premier conduit 7 pour l'écoulement d'un premier flux d'air F1 et au moins un deuxième conduit 9 pour l'écoulement d'un deuxième flux d'air F2. Les deux conduits 7, 9 peuvent être tous deux alimentés par un flux d'air F à partir d'une entrée d'air commune. Ce flux d'air F peut être réparti entre le premier flux d'air F1 et/ou le deuxième flux d'air F2.

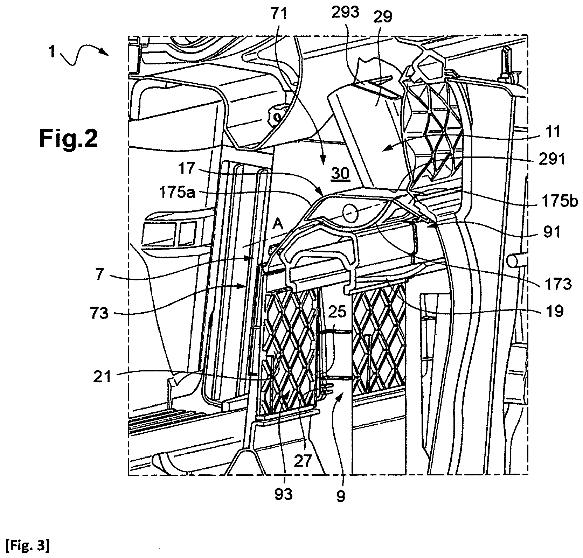

Les deux conduits 7, 9 sont mieux visibles sur la vue agrandie de la figure 2. Le premier conduit 7 définit une première sortie d'air 71. Le deuxième conduit 9 définit une deuxième sortie d'air 91. À l'intérieur du boîtier 3, les deux sorties d'air 71 et 91 débouchent sur une chambre de mixage 11 du dispositif 1. Chaque conduit 7, 9 présente une entrée respective 73, 93.

Cette chambre de mixage 11 est destinée à être en communication fluidique avec différentes bouches ou buses de sortie d'air (non représentées) réparties dans l'habitacle du véhicule. À cet effet, la chambre de mixage 11 communique avec un ou plusieurs conduits de sortie d'air 13, 15, en se référant de nouveau à la figure 1, tel qu'au moins un conduit de sortie d'air menant à des bouches d'aération prévues sur la planche de bord du véhicule, au moins un conduit 13 menant à au moins une bouche ou buse (non représentée) située en partie supérieure ou haute de l'habitacle, tel qu'un conduit de dégivrage 13 desservant au moins une buse de dégivrage/désembuage du pare-brise du véhicule, au moins un conduit 15 menant à au moins une bouche (non représentée) située en partie inférieure de l'habitacle, on parle également de sorties « pieds ». De tels conduits 13, 15 communiquant avec la chambre de mixage 11 peuvent être respectivement contrôlés par au moins un volet pour gérer l'alimentation des bouches de sorties ou buses correspondantes. Dans le cas d'un dispositif 1 pouvant fonctionner selon un mode bi-zones, on peut prévoir des volets de commande pilotés de façon indépendante de part et d'autre de la cloison interne de séparation 30.

Le flux d'air F peut être refroidi par passage dans l'évaporateur (non représenté sur la figure 1) par exemple. La portion du flux d'air qui est dirigée vers le premier conduit 7 est un flux d'air froid. Il s'agit du premier flux d'air dont l'écoulement est schématisé par la flèche en trait plein F1, également nommé par la suite flux d'air froid. Le premier conduit 7 est aussi dénommé conduit d'air froid, et la première sortie d'air 71, sortie d'air froid.

Le deuxième conduit 9 est avantageusement prévu pour loger un échangeur thermique tel qu'un radiateur de chauffage propre à être parcouru par un fluide, tel qu'un liquide chaud, habituellement le liquide servant au refroidissement du moteur du véhicule. La portion du flux d'air dirigé vers le deuxième conduit 9 balaye un tel radiateur et est réchauffé. Il s'agit du deuxième flux d'air schématisé par la flèche en pointillés F2, aussi dénommé flux d'air chaud. Le deuxième conduit 9 est aussi dénommé conduit d'air chaud ou de réchauffage. La deuxième sortie d'air 91 est aussi dénommée sortie d'air chaud.

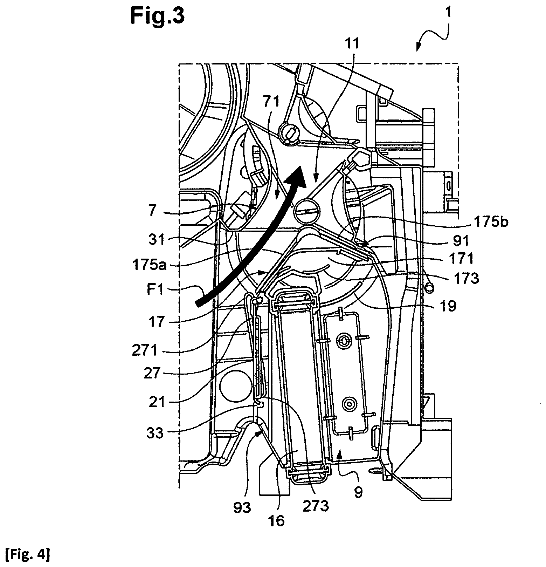

Le radiateur peut être logé au niveau de l'entrée 93 du conduit d'air chaud 9. Un tel radiateur 16 est représenté schématiquement sur les figures 3 à 5. Dans cet exemple, le radiateur 16 est placé dans une position sensiblement verticale par rapport à l'orientation des éléments sur ces figures.

Le dispositif 1 comprend en outre au moins un organe de mixage, pour répartir, le flux d'air F entre les deux conduits 7, 9, en proportions réglables, et ainsi ajuster la température du flux d'air dans la chambre de mixage 11.

Selon le mode de réalisation décrit, l'organe de mixage comporte un volet de mixage 17 qui permet de régler la répartition des premier F1 et deuxième F2 flux d'air en provenance des deux sorties d'air 71, 91 dans la chambre de mixage 11. Le volet de mixage 17 est monté à l'intérieur du boîtier 3. Le dispositif 1 peut comporter deux volets de mixage 17 disposés côte à côte, par exemple lorsqu'elle permet un fonctionnement bi-zones.

Dans l'exemple illustré sur les figures 3 à 5, le volet de mixage 17 est agencé en vis-à-vis d'une extrémité de l'échangeur thermique dans le conduit d'air chaud 9, tel que le radiateur 16. Il est donc situé immédiatement au-dessus du radiateur 16 selon l'orientation des éléments sur les figures 3 à 5.

Le volet de mixage 17 est agencé dans le boîtier 3, plus précisément dans la chambre de mixage 11.

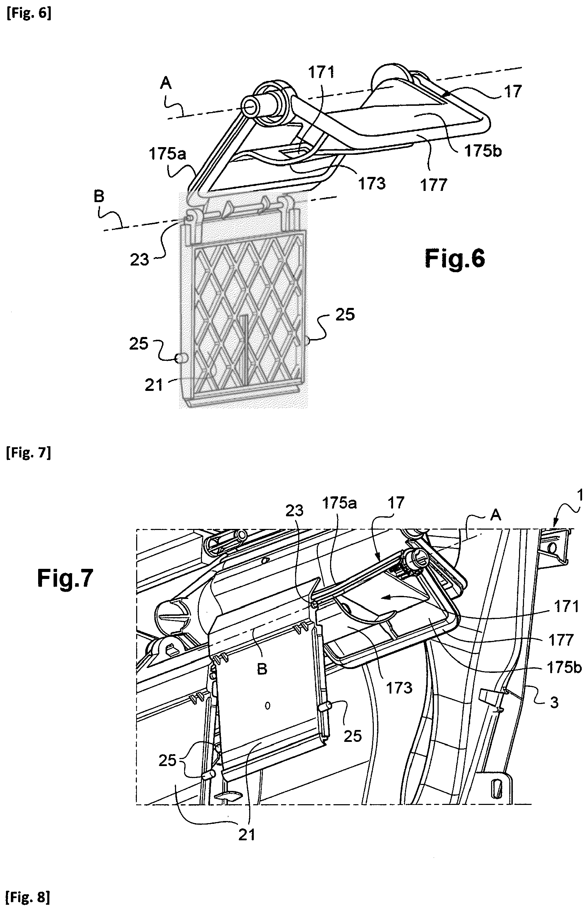

Le volet de mixage 17 mieux visible sur la figure 6 ou la figure 7, est monté pivotant autour d'un axe de rotation A. Le volet de mixage 17 peut être entraîné en rotation, dans un sens ou dans l'autre, par tout moyen de commande approprié tel que, par exemple, une commande par câble, un micromoteur, ou autre.

Le volet de mixage 17 est mobile entre une première position (non représentée sur les figures) obturant la première sortie d'air 71, et, une deuxième position obturant la deuxième sortie d'air 91, comme représenté sur la figure 3. Il s'agit de première et deuxième positions extrêmes.

La première position est par exemple une position « chaud » (non représentée), c'est-à-dire que le volet de mixage 17 ferme complètement la sortie d'air froid 71 du conduit d'air froid 7. Dans cette position « chaud », le flux d'air F est obligé de passer uniquement par le conduit d'air chaud 9. Il est donc dirigé de façon à balayer le radiateur logé dans le conduit d'air chaud 9, comme schématisé par la flèche F2 en pointillés sur la figure 1, ce qui permet de produire un flux d'air chaud F2 qui parvient à la chambre de mixage 11. Ce flux d'air chaud F2 peut être ensuite réparti entre les différentes bouches ou buses de distribution d'air prévues dans l'habitacle.

La deuxième position, représentée de façon schématique sur la figure 3, est par exemple une position « froid », c'est-à-dire que le volet de mixage 17 ferme complètement la sortie d'air chaud 91 du conduit d'air chaud 9, fermant ainsi complètement la communication entre le conduit d'air chaud 9 et la chambre de mixage 11. Dans cette position « froid », le flux d'air froid est obligé de passer par le conduit d'air froid 7 pour produire un flux d'air froid, comme schématisé par la flèche F1 sur les figures 1 et 3. Le flux d'air circule uniquement dans le conduit d'air froid 7. Le flux d'air froid F1 peut ensuite être réparti dans l'habitacle par les moyens de distribution, tels que différentes bouches ou buses de distribution d'air.

Le flux d'air froid F1 est ensuite dirigé vers la chambre de mixage 11.

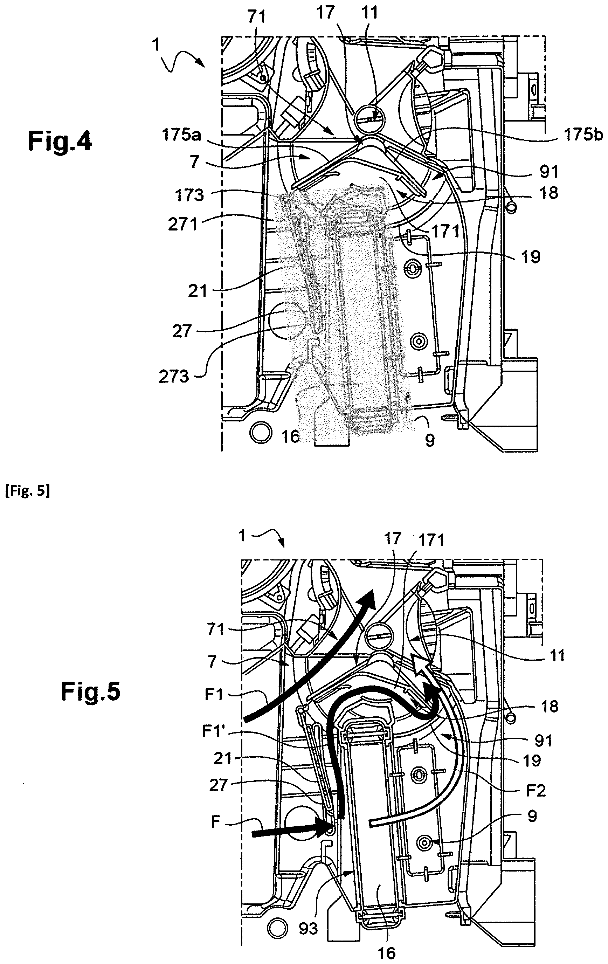

Le volet de mixage 17 peut prendre toute position intermédiaire entre ces deux positions extrêmes, comme schématisé sur les figures 4 et 5. Les positions intermédiaires correspondent à différentes répartitions du flux d'air entre les conduits d'air froid 7 et d'air chaud 9, et, par conséquent, à d'autres niveaux de température du flux d'air dans la chambre de mixage 11.

Par ailleurs, le volet de mixage 17 présente au moins un évidement 171. Cet évidement 171 définit ainsi un passage ou canal additionnel 18 qui permet de canaliser une partie du flux d'air F, lorsque le volet de mixage 17 est agencé dans une position intermédiaire, comme illustré sur la figure 5.

Plus précisément, le canal additionnel 18 est délimité par la partie du volet de mixage 17 présentant le ou les évidements 171 et une paroi du boîtier 3.

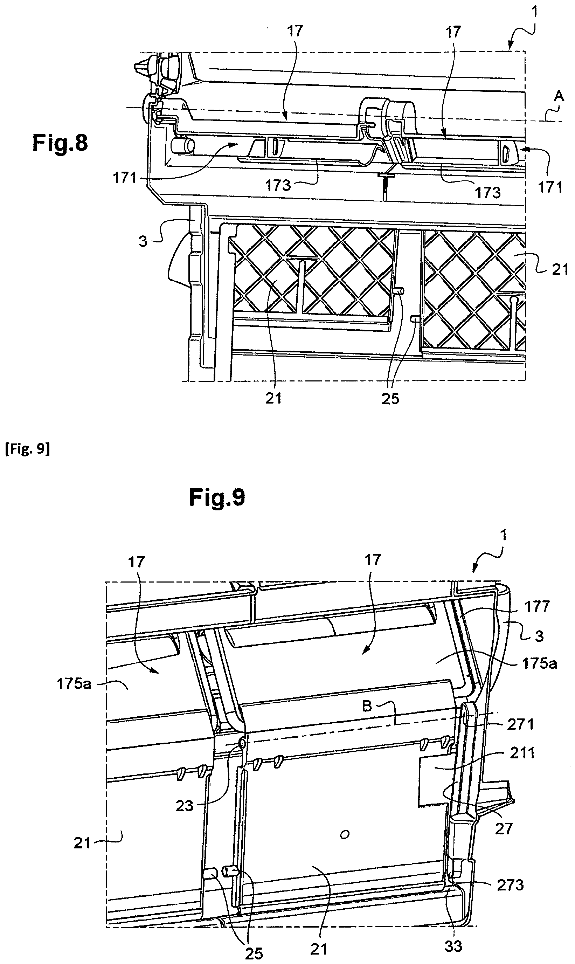

Cet évidement peut être un évidement 171 sensiblement central, comme illustré sur la figure 6. En variante, l'évidement 171 peut être un évidement latéral comme illustré sur les figures 7 et 8.

Le canal additionnel 18 permet l'écoulement d'une partie du flux d'air en sortie de l'évaporateur qui est donc un flux d'air froid, comme schématisé par la flèche F1 ' sur la figure 5. Ce flux d'air froid additionnel F1' contourne le radiateur 16 pour s'écouler à travers le canal additionnel 18.

Le canal d'air froid additionnel 18 permettant l'écoulement du flux d'air froid additionnel F1' à travers le volet de mixage 17 vers la deuxième sortie d'air 91, est aussi nommé canal d'air froid additionnel. Selon le mode de réalisation illustré, avec le volet de mixage 17 situé au-dessus du radiateur 16, selon l'orientation des éléments sur les figures 4 et 5, le canal d'air froid additionnel 18 est également délimité entre le radiateur 16 et la partie du volet de mixage 17 présentant l'évidement 171, lorsque le volet de mixage 17 est dans une position intermédiaire.

Autrement dit, le volet de mixage 17 est conformé de sorte que lorsque le volet de mixage 17 est dans une position extrême, le canal froid additionnel 18 est fermé et il est libéré ou dégagé lorsque le volet de mixage 17 pivote, passant en position intermédiaire.

Ainsi, dans une telle position intermédiaire du volet de mixage 17, une partie du flux d'air F est orientée vers le conduit d'air froid 7, formant le premier flux d'air F1. Une autre partie du flux d'air F est divisée entre le flux d'air froid additionnel F1' traversant le volet de mixage 17 et le deuxième flux d'air F2 traversant le radiateur 16. Le flux d'air froid additionnel F1' accède à la chambre de mixage 11 par la deuxième sortie d'air 91. Ceci permet au flux d'air froid additionnel F1' de rencontrer le flux d'air chaud F2 dans une région immédiatement au-dessus du radiateur 16.

Par ailleurs, le volet de mixage 17 est par exemple un volet tambour.

Dans le mode de réalisation illustré, le volet de mixage 17 présente une structure particulière, décrite plus en détail en référence à la figure 6 selon une première variante de réalisation ou aux figures 7 et 8 selon une deuxième variante de réalisation.

Selon l'une ou l'autre des variantes des figures 6 à 8, le volet de mixage 17 comprend une paroi d'obturation 173. Il s'agit par exemple d'une paroi centrale reliant deux ailes ou parois latérales 175a, 175b. Les deux parois latérales 175a, 175b sont situées de part et d'autre de l'axe de rotation A en étant inscrites dans deux plans distincts. Ces deux parois latérales 175a, 175b sont par exemple de forme générale sensiblement rectangulaire. Les parois latérales 175a, 175b peuvent être munies, à leur périphérie, d'un joint d'étanchéité 177.

Une première paroi latérale 175a est propre à obturer la sortie d'air froid 71 en complément de la paroi d'obturation 173, dans la position « chaud » (non représentée). Dans cette position « chaud », le bord de la première paroi latérale 175a du volet de mixage 17 peut venir en appui de façon étanche contre le boîtier 3, par exemple contre un rebord 31 du boîtier 3.

Une deuxième paroi latérale 175b est propre à obturer la sortie d'air chaud 91 en complément de la paroi d'obturation 173, dans la position « froid » (figures 1 et 3). Dans cette position « froid », la deuxième paroi latérale 175b du volet de mixage 17 vient en appui de façon étanche contre le boîtier 3.

Dans une position intermédiaire entre les positions « froid » et « chaud », comme schématisée sur les figures 4 et 5, la première paroi latérale 175a libère partiellement la sortie d'air froid 71, tandis que la deuxième paroi latérale 175b libère partiellement la sortie d'air chaud 91.

En se référant de nouveau à la figure 6 ou à la figure 7, la paroi d'obturation 173 s'étend par exemple sensiblement à mi-hauteur des parois latérales 175a, 175b.

Dans ces exemples, la paroi d'obturation 173 présente une forme incurvée, ou une forme d'arche, par exemple une forme générale semi-cylindrique centrée sur l'axe de rotation A. Cette paroi d'obturation 173 est par exemple concave, avec sa concavité tournée du côté opposé au radiateur 16, lorsque le volet de mixage 17 est monté dans le boîtier 3 comme représenté sur les figures 3 à 5.

L'évidement 171 peut être situé au centre ou sensiblement au centre de la paroi d'obturation 173 comme schématisé sur la figure 6.

En variante, l'évidement 171 peut être réalisé latéralement, et donc sur les côtés du volet de mixage 17 entre les deux parois latérales 175a et 175b, comme schématisé sur les figures 7 et 8. L'évidement 171 permet d'augmenter le jeu entre le volet de mixage 17 et une paroi latérale du boîtier 3.

En particulier, lorsque le dispositif 1 comporte deux volets de mixage 17 disposés côte à côte, notamment dans le cas d'un dispositif 1 permettant un fonctionnement bi-zones deux évidements 171 sont prévus de part et d'autre des deux volets de mixage 17. Chaque évidement 171 est prévu entre le volet de mixage 17 correspondant et une paroi latérale du boîtier 3. Les évidements 171 sont donc prévus en regard de deux parois latérales opposées du boîtier 3.

Le dispositif 1 comporte en outre au moins une nervure 19. Cette nervure 19 s'étend sur une paroi du boîtier 3. En particulier, le dispositif 1 comporte au moins deux nervures 19 s'étendant sur deux parois opposées du boîtier 3, dont une seule est visible sur les figures 1 à 5. L'une des parois du boîtier 3 peut être la cloison de séparation interne 30.

Chaque nervure 19 est agencée entre le conduit d'air chaud 9 et la chambre de mixage 11. Chaque nervure 19 est donc disposée entre le conduit d'air chaud 9 et le volet de mixage 17 lorsqu'il est en position intermédiaire (figures 4, 5) ou dans la position « froid » (figure 3) obturant la sortie d'air chaud 91.

Plus précisément, chaque nervure 19 est agencée entre le conduit d'air chaud 9 et le canal additionnel 18 qui est dégagé lorsque le volet de mixage 17 est en position intermédiaire (figures 4, 5).

Chaque nervure 19 est agencée en aval de l'échangeur thermique, tel le radiateur 16, logé dans le conduit d'air chaud 9. Selon le mode de réalisation illustré, chaque nervure 19 est disposée à proximité immédiate d'une extrémité du radiateur 16.

La ou les nervures 19 permettent de favoriser l'écoulement du flux d'air froid additionnel F1' dans le canal d'air froid additionnel 18. En effet, chaque nervure 19 permet de faire écran au moins en partie au flux d'air chaud F2 ayant traversé le radiateur 16, et s'écoulant en direction de la chambre de mixage 11, c'est-à-dire remontant selon l'orientation des éléments sur la figure 5. Ceci favorise ainsi l'écoulement du flux d'air froid additionnel F1' à travers l'évidement 171 vers la chambre de mixage 11, lorsque le volet de mixage 17 est dans une position intermédiaire, pour un meilleur mélange des flux d'air.

Autrement dit, chaque nervure 19 évite que tout le flux d'air chaud F2 ne s'engouffre dans la chambre de mixage 11 puis dans le ou les conduits de sortie d'air à proximité immédiate de la sortie d'air chaud 91, tels que les conduits alimentant les sorties « pieds », lorsque de tels conduits sont ouverts, sans que le flux d'air froid additionnel F1' ne puisse passer. Les nervures 19 permettent de réduire la pression du flux d'air chaud F2 afin de faciliter le passage du flux d'air froid additionnel F1'. On obtient un meilleur mélange des flux d'air et cela limite un trop grand écart de températures entre les différents conduits de sortie d'air et les bouches ou buses dans l'habitacle.

Le dimensionnement d'une telle nervure 19 est choisi selon un compromis pour favoriser le passage d'air froid sans empêcher totalement le flux d'air chaud F2 de circuler. À titre d'exemple, une telle nervure 19 peut s'étendre sur une distance inférieure ou égale au tiers de largeur du volet de mixage 17. La largeur s'entend ici de la distance entre les bordures d'extrémité des deux parois latérales qui sont opposées à l'axe de rotation A.

Selon le mode de réalisation particulier illustré, la nervure 19 présente une forme incurvée. La nervure 19 peut présenter par exemple une forme générale similaire à celle de la paroi d'obturation 173 du volet de mixage 17 telle que décrite précédemment.

Le dispositif 1 et en particulier l'organe de mixage comporte en outre une paroi mobile 21, dite porte esclave, reliée de façon articulée au volet de mixage 17. La paroi mobile 21 ou porte esclave peut présenter une forme générale rectangulaire.

Selon le mode de réalisation illustré, la paroi mobile 21 est logée dans le conduit d'air chaud 9, en amont du radiateur 16 selon le sens d'écoulement du flux d'air.

La paroi mobile 21 est reliée au volet de mixage 17 par une charnière 23. La charnière 23 s'étend par exemple suivant un axe B parallèle à l'axe de rotation A du volet de mixage 17.

La paroi mobile 21 peut être reliée de façon articulée à une paroi latérale du volet de mixage 17, dans cet exemple à la première paroi latérale 175a. La paroi mobile 21 est mobile en pivotement par rapport à cette paroi latérale 175a.

Le volet de mixage 17 et la paroi mobile 21 peuvent être mobiles de façon coordonnée. La paroi mobile 21 est avantageusement configurée pour obturer la première sortie ou sortie d'air froid 71 lorsque le volet de mixage 17 est dans la première position ou position « chaud » (non représentée). La paroi mobile 21 peut venir se rabattre contre le volet de mixage 17 lorsqu'il est dans la première position.

La paroi mobile 21 est configurée pour obturer l'entrée 93 du deuxième conduit ou conduit d'air chaud 9, lorsque le volet de mixage 17 est dans la deuxième position ou position « froid » (figure 3). La paroi mobile 21 s'étend par exemple en amont du radiateur 16 selon le sens d'écoulement du flux d'air, lorsque le volet de mixage 17 est dans la deuxième position.

La paroi mobile 21 peut comporter en outre au moins une ouverture 211 (schématisée sur la figure 9) pour accroître le débit du flux d'air additionnel, notamment du flux d'air froid additionnel, lorsqu'il contourne le radiateur 16 pour s'écouler à travers le canal d'air froid additionnel 18 (comme schématisé par la flèche F1' sur la figure 5).

Le positionnement de l'ouverture 211 est par exemple défini en fonction de l'emplacement de l'évidement 171 du volet de mixage 17. Une telle ouverture 211 est avantageusement disposée de façon complémentaire et similaire à l'évidement 171 du volet de mixage 17. Autrement dit, l'ouverture 211 peut être prévue du même côté que l'évidement 171 du volet de mixage 17. Dans l'exemple de la figure 9, l'ouverture 211 est située sur un côté de la paroi mobile 21, en face d'une paroi latérale du boîtier 3, de façon complémentaire à un évidement 171 latéral (non visible sur la figure 9) du volet de mixage 17. Selon la variante dans laquelle l'évidement 171 est central (figure 6), dans ce cas une telle ouverture 211 serait avantageusement sensiblement au centre de la paroi mobile 21.

La forme et le dimensionnement de l'ouverture 211 peuvent être adaptés selon les besoins et la performance souhaitée. Dans l'exemple de la figure 9, l'ouverture 211 est schématisée avec une forme sensiblement rectangulaire non limitative. À titre d'exemple non limitatif, l'ouverture 211 peut, par exemple suivant l'axe B, s'étendre sur une distance qui peut atteindre la dimension de l'évidement 171 (non visible sur la figure 9) du volet de mixage 17 suivant l'axe A.

Par ailleurs, le dispositif 1 comporte des éléments de guidage complémentaires 25, 27 (voir figures 3 à 6 et 9) qui coopèrent de façon à guider la trajectoire de la paroi mobile 21 lors du déplacement du volet de mixage 17. Les éléments de guidage complémentaires 25, 27 sont portés d'une part par la paroi mobile 21 et d'autre part par une paroi du boîtier 3. Les éléments de guidage 25, 27 comportent par exemple au moins un pion de guidage 25 et au moins un rail de guidage 27.

De façon non limitative, la paroi mobile 21 peut porter le ou les pions de guidage 25, par exemple deux pions 25 opposés. Chaque pion 25 est agencé à distance de la charnière 23. Un rail de guidage 27 peut être agencé sur deux parois opposées du boîtier 3, de part et d'autre de la paroi mobile 21. Chaque rail de guidage 27 est par exemple de forme générale rectiligne. Chaque pion 21 est propre à coulisser dans un rail de guidage 27 associé pour imposer la trajectoire de la paroi mobile 21 lorsque le volet de mixage 17 pivote autour de l'axe de rotation A. À l'inverse, les pions pourraient être prévus sur le boîtier 3 et les rails de guidage sur la paroi mobile 21.

Les rails de guidage 27 sont agencés en amont de l'échangeur thermique tel le radiateur 16 logé dans le conduit d'air chaud 9, selon le sens d'écoulement du flux d'air (voir figures 3 à 5). En se référant aux figures 3, 4 et 9, une première extrémité 271 du rail de guidage 27 est située immédiatement sous le volet de mixage 17. Cette première extrémité 271 est disposée à proximité d'une extrémité du radiateur 16 (non visible sur la figure 9). Une deuxième extrémité 273 du rail de guidage 27, opposée à la première extrémité 271, est par exemple disposée en vis-à-vis d'un rebord 33 du boîtier 3.

Dans la position « chaud » (non représentée), la charnière 23 peut venir en butée contre le rebord 31 du boîtier 3. En outre, chaque pion 25 se trouve à l'une des extrémités du rail de guidage 27 associé. Il s'agit notamment de la première extrémité 271. Il en résulte que le conduit d'air froid 7 est complètement fermé.

Dans la position « froid » de la figure 3, la charnière 23 peut venir en butée contre un rebord de butée au-dessus du radiateur 16 selon l'orientation des éléments sur cette figure. En outre, chaque pion 25 est dans une position proche de l'autre extrémité, la deuxième extrémité 273, du rail guidage 27 associé (voir figures 3 et 9), de sorte que le bord d'extrémité de la paroi mobile 21, opposé à la charnière 23, vient en butée ou en appui, de façon étanche, contre le rebord 33 du boîtier 3. Il en résulte que la paroi mobile 21 ferme la communication entre l'entrée d'air commune et l'entrée 93 du conduit d'air chaud 9 (figure 3). Ainsi, à la fois l'entrée 93 et la sortie 91 du conduit d'air chaud 9 sont fermées complètement, respectivement par la paroi mobile 21 et le volet de mixage 17. Ceci constitue une mesure de sécurité évitant tout risque de fuite d'air dans le conduit d'air chaud 9.

Dans la position intermédiaire des figures 4 et 5, le volet de mixage 17 a pivoté de façon à ouvrir en partie la communication entre la sortie d'air froid 71 et la chambre de mixage 11, et en partie la communication entre la sortie d'air chaud 91 et la chambre de mixage 11. De façon complémentaire, chaque pion 25 s'est déplacé dans le rail de guidage 27 associé, entre les deux extrémités 271, 273, provoquant ainsi un écartement de la charnière 23 par rapport au radiateur 16. Il en résulte que la paroi mobile 21 ouvre en partie la communication entre l'entrée d'air commune et l'entrée d'air chaud 93. Le flux d'air peut passer à la fois par le conduit d'air froid 7 (flèche F1) et par le canal additionnel d'air 18 (flèche F1') et par le conduit d'air chaud 9 (flèche F2) pour produire un flux d'air mixé dans la chambre de mixage 11. Cet air mixé est ensuite réparti dans l'habitacle par les moyens de distribution tels que les différentes bouches ou buses de distribution d'air.

Selon l'exemple de réalisation particulier de la figure 9, lorsque le volet de mixage 17 est dans une position intermédiaire ayant provoqué le déplacement de la paroi mobile 21, le flux d'air en provenance de l'entrée d'air commune, dans cet exemple le flux d'air froid, destiné à contourner le radiateur 16 comme schématisé par la flèche F1' sur la figure 5, peut également s'écouler à travers l'ouverture 211 avant de s'écouler dans le canal additionnel d'air 18, ce qui permet d'accroître le débit du flux d'air froid additionnel.

Le dispositif 1 peut en outre comporter au moins un autre ou deuxième canal additionnel, nommé par la suite canal additionnel d'air chaud 29, partiellement visible sur la figure 2. En effet, le canal additionnel d'air chaud 29 est destiné à être parcouru par le flux d'air chaud F2. Plus précisément, ce canal additionnel d'air chaud 29 est agencé de façon à favoriser le mélanger du flux d'air chaud F2 provenant du conduit d'air chaud 9 avec de l'air mixé provenant de la chambre de mixage 11. Ceci est en particulier avantageux, lorsque le flux d'air mixé est destiné à s'écouler dans un conduit de sortie d'air en partie haute du boîtier 3, selon l'orientation des éléments sur les figures 1 et 2, tel qu'un conduit alimentant des bouches ou buses de dégivrage.

Le dispositif 1 peut comporter plusieurs canaux additionnels d'air chaud 29, par exemple au moins deux, notamment dans le cas d'un dispositif dite bi-zone permettant de contrôler indépendamment le flux d'air à destination d'au moins deux zones de l'habitacle. Dans ce cas, les canaux additionnels d'air chaud 29 peuvent être raccordés par exemple à la cloison de séparation centrale 30 à l'intérieur du boîtier 3.

Par ailleurs, le ou chaque canal additionnel d'air chaud 29 comporte une entrée 291 débouchant au moins en partie dans la sortie d'air chaud 91 et une sortie 293 débouchant au voisinage d'un conduit de sortie d'air, tel qu'un conduit de dégivrage 13 desservant au moins une buse de dégivrage/désembuage du pare-brise du véhicule.

De plus, chaque canal additionnel d'air chaud 29 est agencé immédiatement au-dessus du volet de mixage 17 selon l'orientation des éléments sur la figure 2.

Ainsi, quand le volet de mixage 17 est dans une position intermédiaire libérant en partie la sortie d'air chaud 91, une partie du flux d'air chaud F2 s'écoule dans le canal additionnel d'air chaud 29 pour déboucher à proximité de l'entrée d'un conduit de sortie d'air, par exemple le conduit de dégivrage 13, alimentant les bouches de dégivrage ou ventilation, les flux d'air peuvent se mélanger dans le conduit de sortie d'air tel que le conduit de dégivrage 13.

On comprend donc que dans un dispositif 1 telle que décrite précédemment, le canal additionnel d'air froid 18 entre le volet de mixage 17 et l'échangeur thermique tel le radiateur 16 logé dans le conduit d'air chaud 9, et la ou les nervures 19 à proximité immédiate du radiateur 16, permettent, lorsque le volet de mixage 17 passe dans une position intermédiaire, de ramener de l'air froid et de favoriser l'écoulement, voire diriger un flux d'air froid, en face d'un flux d'air chaud pour assurer leur mélange dans une région proche du radiateur 16. Ceci permet d'éviter que tout le flux d'air chaud ne s'engouffre vers les conduits alimentant les sorties pieds, par exemple, et permet de limiter l'écart de température entre les parties haute et basse de l'habitacle, c'est-à-dire entre les sorties de dégivrage et les sorties pieds.

La paroi mobile ou porte esclave 21 articulée sur le volet de mixage 17 permet d'éviter un échauffement parasitaire du flux d'air froid quand le volet de mixage 17 est dans une position « froid », par exemple par convection en passant dans le conduit d'air chaud 9.

Enfin, le ou les canaux additionnels d'air chaud 29 permettent de favoriser l'écoulement d'une partie du flux d'air chaud vers la partie haute du dispositif 1 pour un meilleur mélange des flux d'air et une température ajustée en limitant les écarts de température entre les différentes bouches ou buses à l'intérieur de l'habitacle.]

## Revendications

1. Dispositif (1) de chauffage, ventilation et/ou climatisation pour véhicule automobile, comprenant :
a. au moins un premier conduit (7) pour l'écoulement d'un premier flux d'air (F1), définissant une première sortie d'air (71),
b. au moins un deuxième conduit (9) pour l'écoulement d'un deuxième flux d'air (F2), définissant une deuxième sortie d'air (91),
c. au moins une chambre de mixage (11) communiquant avec les sorties d'air (71, 91) respectives desdits conduits (7, 9), et
d. au moins un volet de mixage (17) agencé de façon à contrôler la répartition des premier (F1) et deuxième (F2) flux d'air dans ladite au moins une chambre de mixage (11), ledit au moins un volet de mixage (17) étant agencé mobile entre une première position obturant la première sortie d'air (71), et, une deuxième position obturant la deuxième sortie d'air (91), **caractérisé en ce que** :
e. ledit au moins un volet de mixage (17) présente au moins un évidement (171), de façon à délimiter, lorsque ledit au moins un volet de mixage (17) est agencé dans une position intermédiaire entre les première et deuxième positions, un canal additionnel (18) pour l'écoulement d'un flux d'air additionnel (F1') à travers ledit au moins un volet de mixage (17), et **en ce que**
f. ledit dispositif (1) comporte en outre au moins une nervure (19) agencée entre le deuxième conduit (9) et le canal additionnel (18), de façon à favoriser l'écoulement du flux d'air additionnel (F1') vers la chambre de mixage (11) via le canal additionnel (18).

2. Dispositif (1) selon la revendication précédente, dans lequel ledit au moins un évidement (171) est latéral ou sensiblement central

3. Dispositif (1) selon l'une des revendications précédentes, comportant au moins deux nervures (19) disposées contre deux parois opposées d'un boîtier (3) dudit dispositif (1).

4. Dispositif (1) selon l'une des revendications précédentes, dans lequel ledit au moins un volet de mixage (17) est monté pivotant autour d'un axe de rotation (A), et comportant deux parois latérales (175a, 175b) reliées par une paroi centrale (173), et dans laquelle ladite au moins une nervure (19) s'étend sur une distance inférieure ou égale au tiers de largeur dudit au moins un volet de mixage (17) entre les bordures d'extrémité des deux parois latérales (175a, 175b) dudit au moins un volet de mixage (17).

5. Dispositif (1) selon l'une quelconque des revendications précédentes, comportant un échangeur thermique (16), logé dans le deuxième conduit (9), et dans laquelle ledit au moins un volet de mixage (17) est agencé en vis-à-vis d'une extrémité de l'échangeur thermique (16), de sorte que le canal additionnel (18) est délimité entre ledit au moins un volet de mixage (17) et l'échangeur thermique (16).

6. Dispositif (1) selon l'une quelconque des revendications précédentes, comportant en outre une paroi mobile (21), reliée de façon articulée audit au moins un volet de mixage (17) par une charnière (23), et configurée pour obturer la première sortie d'air froid (71) lorsque ledit au moins un volet de mixage (17) est dans la première position, et pour obturer une entrée (93) du deuxième conduit (9), lorsque ledit au moins un volet de mixage (17) est dans la deuxième position.

7. Dispositif (1) selon les revendications 4 et 6, dans lequel la charnière (23) s'étend suivant un axe (B) parallèle à l'axe de rotation (A) dudit au moins un volet de mixage (17).

8. Dispositif (1) selon la revendication 5 prise en combinaison avec l'une des revendications 6 ou 7, dans lequel la paroi mobile (21) s'étend en amont de l'échangeur thermique (16) selon le sens d'écoulement du flux d'air, lorsque ledit au moins un volet de mixage (17) est dans la deuxième position.

9. Dispositif (1) selon l'une quelconque des revendications 6 à 8, comportant au moins deux éléments de guidage (25, 27) complémentaires portés d'une part par la paroi mobile (21) et d'autre part par une paroi d'un boîtier (3) dudit dispositif (1), lesdits éléments de guidage (25, 27) étant configurés pour coopérer de façon à guider la trajectoire de la paroi mobile (21) lors du déplacement dudit au moins un volet de mixage (17).

10. Dispositif (1) selon l'une quelconque des revendications précédentes, comportant au moins un conduit de sortie d'air (13) en communication fluidique avec la chambre de mixage (11) et configuré pour alimenter une buse débouchant dans une partie haute de l'habitacle, et au moins un autre canal additionnel (29) comprenant une entrée (291) débouchant au moins en partie dans la deuxième sortie d'air (91) et une sortie (293) débouchant au voisinage dudit au moins un conduit de sortie d'air (13).
